# EUROPEAN PATENT APPLICATION

(11) **EP 1 703 720 A2**
(43) Date of publication of application: **20.09.2006**
(21) Application number: 06251003.7
(22) Date of filing: 24.02.2006
(51) Int. Cl.: H04N 5/21

(54) **Correcting light amount in non-centered-area of optically shot image**

(30) Priority: 25.02.2005 JP 2005051056
(71) Applicant: Ricoh Company, Ltd., Tokyo 143-8555 (JP)
(72) Inventor: Haike, Guan, Ohta-ku Tokyo 143-8555 (JP)
(74) Representative: Leeming, John Gerard

(57) **Abstract**

An image correcting method, apparatus, computer program product, and computer readable medium, each capable of correcting a reduced light amount in a non-center area of an image are disclosed. A plurality of shooting conditions are obtained, which are set at a time the image is shot and include a zoom position of a lens, a shooting distance, and a numerical aperture. Prestored data of non-center-area light amount are referred to in accordance with the plurality of shooting conditions set at the time the image is shot. The reduced light amount in the non-center-area relative to the image data is corrected based on the prestored data of the non-center-area light amount.

## Description

The present invention relates to a method and apparatus for optical scanning, and more particularly to a method and apparatus for optical scanning capable of reducing a dot position displacement and a dot diameter variation based on a variation in wave length of a laser beam.

In recent years, a digital camera that electronically processes an image has been wide spread and rapidly replacing conventional silver salt film camera. In general, the digital camera has an enhanced performance and capabilities and is capable of handling images with an increased number of image pixels. The digital camera, however, has a drawback due to a property of shooting lens. That is, a light amount of a shot image is not evenly distributed. The center of the shot image is brighter than other areas of the shot image. The light amount of a spot in the shot image decreases as a distance of the spot from the center of the shot image increases. In particular, this problem tends to occur at a wide-zoom edge having a wide angle of view when a zoom lens is used.

One attempt to solve this problem is to correct an image according to correction parameters. In one example, a white plate is used as a shooting subject and luminance of the shot image is measured. Then, correction parameters are calculated from the measurement results. This correction can be applied to a lens of a short focal length. However, in a case of a zoom lens, the correction parameters may vary depending on shooting conditions such as a shooting distance, zooming position, and numerical aperture. Correction of an image which has already been shot is not possible because the above-mentioned shooting conditions are unknown.

Another attempt to solve this problem is to correct an image based on the shooting conditions. In one example, a plurality of correction coefficients relative to a plurality of respective focal lengths are previously stored in a data table in association with distances from a light axis of the lens. Then, the correction coefficients are read from the data table according to the shooting conditions at a time of shooting and are used to correct a light amount of a shot image.

In view of the foregoing, the present invention provides a novel image correcting method, apparatus, computer program product, and computer readable medium, each of which is capable of correcting a reduced light amount in a non-center area of an image shot by an optical system.

In one example, non-center-area light amount data is stored. Image data of an image shot by an optical system is input. A plurality of shooting conditions are obtained, which include a zoom position of a lens, a shooting distance, and a numerical aperture set at a time the image is shot by the optical system. A reduction of a non-center-area light amount relative to the image data is corrected by referring to the non-center-area light amount data in accordance with the plurality of shooting conditions including the zoom position of the lens, the shooting distance, and the numerical aperture set at the time the image is shot with the optical system.

A more complete appreciation of the disclosure and many of the attendant advantages thereof will be readily obtained as the same becomes better understood by reference to the following detailed description when considered in connection with the accompanying drawings, wherein:
Figs. 1A and 1B are graphs showing a relationship between an image height and a luminance before and after a performance of a light amount correction, respectively;
FIG. 2 is a data table indicating measurement values of non-center-area light amount corresponding to varying image height;
FIG. 3 is an illustration for explaining a structure of image data referred to by the present invention;
FIG. 4 is a graph plotting the values of non-center-area light amount relative to the image height;
FIG. 5 is a block diagram of an image shooting apparatus according to an embodiment of the present invention;
FIG. 6 is a functional block diagram of a non-center-area light amount correction performed by the image shooting apparatus of FIG. 5;
FIG. 7 is a flowchart of the non-center-area light amount correction performed by the image shooting apparatus of FIG. 5;
FIG. 8 is a block diagram of an image correcting apparatus according to an embodiment of the present invention; and
FIG. 9 is a functional block diagram of a non-center-area light amount correction performed by the image correcting apparatus of FIG. 8.

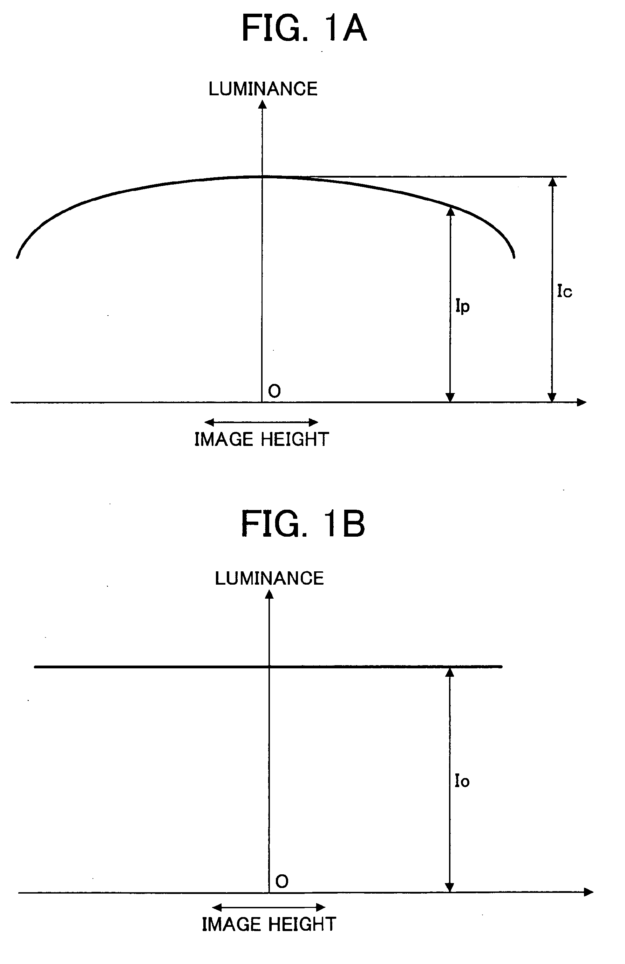

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to FIGs. 1A, 1B, 2, 3, and 4, an explanation is made on a method of correcting an ambient light amount for use in a digital photo capturing according to an embodiment of the present invention.

A graph of FIG. 1A shows a luminance distribution of an image before an ambient light amount is corrected while a graph of FIG. 1B shows a luminance distribution of an image after an ambient light amount is corrected, where the image was shot with a digital camera, for example. In FIGs. 1A and 1B, a horizontal axis is an image width with a center O and a vertical axis is a degree of luminance. Also, in FIG. 1A, Ip is a real pixel value of an image at an arbitrary point of the image, other than the center of the image (i.e., a non-center image), and Ic is a real pixel value of the image at the center of the image. In FIG. 1B, Io is a pixel value of the image after the correction.

As demonstrated in FIG. 1A, the luminance of the image differs between the center and non-center areas of the image, i.e., the center is the brightest spot and the luminance decreases towards the periphery of the image. An extreme reduction of light amount appears at the periphery of the image. A non-center-area light amount P measured at the non-center areas is expressed as a formula F1: P=(Ip/Ic)x100%.

Light intensity of lens data is needed to be converted into a ratio of pixel values. For this, the light intensity is converted into pixel values by using CCD (charge-coupled device) gamma data and the non-center-area light amount P is sought with the formula F1. As an alternative way, non-center-area light amount data of the light intensity is directly converted into non-center-area light amount data of pixel values by using gamma properties.

The non-center-area light amount can be corrected by using a formula F2: Io=Ip/P.

From the above, it is understood that the correction of the non-center-area light amount can be performed as long as the non-center-area light amounts P corresponding to distances from the center of the image is known. This distances are referred to as an image height. For the color image correction, each of RGB (red, green, and blue) pixel values needs to be corrected by using the formula F2.

The graphs of FIGs. 1A and 1B represent general variations of the non-center-area light amount. In an actual correction, the non-center-area light amount P corresponding to various conditions taken at the shooting is needed. The various conditions includes a focal length (a zooming position), a shooting distance from the lens to the object, and a numerical aperture.

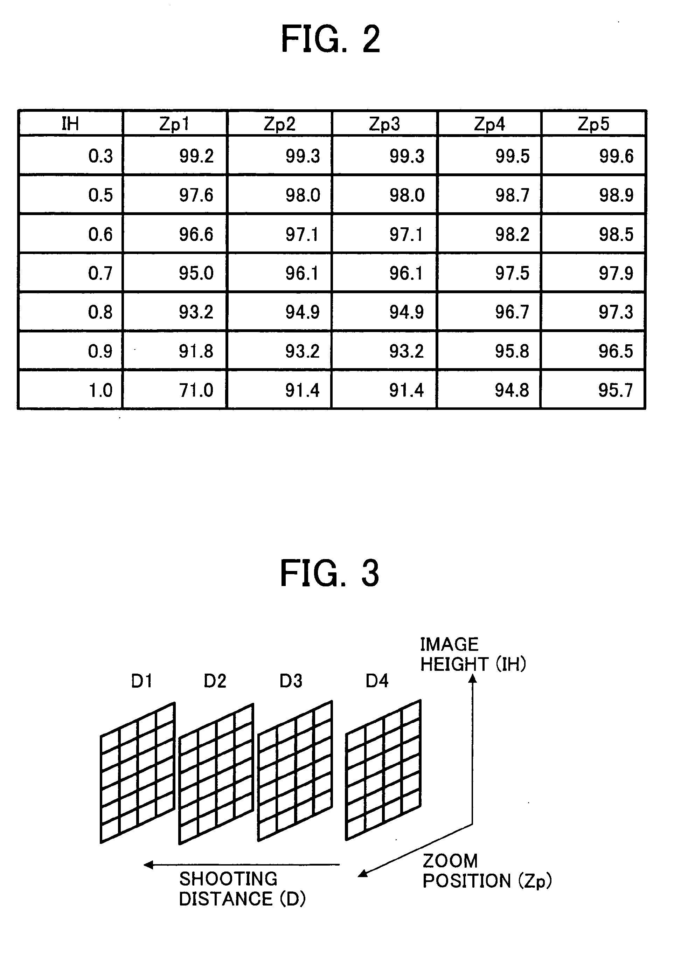

FIG. 2 is a data table showing an example relationship between variations of an image height IH (i.e., a distance from the lens center) and the non-center-area light amount P with varying zooming position Zpn (e.g., Zp1, Zp2, Zp3, Zp4, and Zp5) at a specific shooting distance using a specific numerical aperture. In this data table of FIG. 2, the maximum value of the image height IH is set to 1 and the non-center-area light amount P is expressed in percentage. Alternatively, the non-center-area light amount P may be expressed in a decimal fraction as 0.992 or in an inverse as 1.008 for convenience of multiplication. In this example, the luminance of a white plate was measured. The white plate has a surface which was assumed to have a constant brightness and this brightness was measured with changes of optical conditions. As an alternative to values from the measurement, lens properties obtained during the design stage may be used.

FIG. 3 illustrates a structure of data which the present invention refers to. The illustration of FIG. 3 represents data associated with a shooting distance Dn (i.e., D1, D2, D3, and D4) with a specific numerical aperture. A set of data is formed at each of the shooting distances D1 - D4, as illustrated in FIG. 3, and the data table of FIG. 2 is one example of such a data set. This whole structure of data sets is needed to each of the numerical apertures.

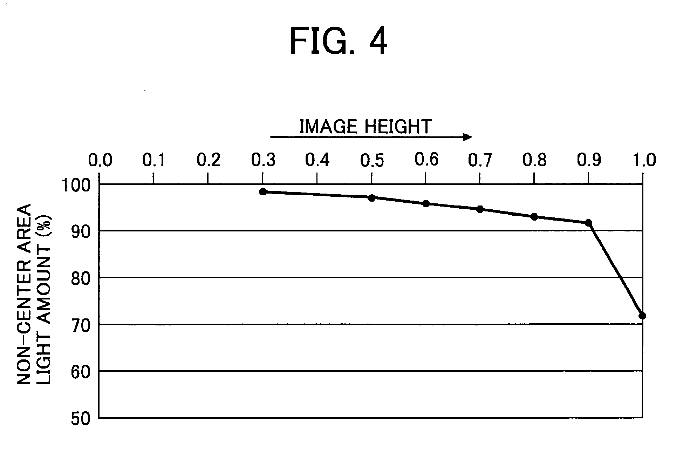

FIG. 4 is made based on the data table of FIG. 2. More specifically, a graph of FIG. 4 plots the non-center-area light amounts P at the zooming position Zp1 along a vertical axis relative to the image heights IH varying along a horizontal axis. The graph may possibly be drawn directly from the data of FIG. 2 by the linear interpolation. However, it is preferable to keep data as accurate and compact as possible at the interpolation. Since the variations of the non-center-are a light amount P are generally nonlinear, it is needed to accurately interpolate intermediate points between actually obtained data shown in the data table of FIG. 2 in order to seek for the non-center-area light amounts P associated with arbitrary image heights IH. The present invention uses a least squares approximation polynomial to obtain a value of the non-center-area light amount P at an arbitrary point on a curve. That is, a curve of the varying non-center-area light amount is approximated by a polynomial expression F3: P=A₀+A₁*Y¹+A₂*Y²+A₃*Y³+···+Aₙ*Yⁿ.

In the polynomial expression F3, a non-center-area light amount P at an image height IH (i.e., Y) is expressed by a sum of the products of approximation polynomial coefficients A₀, A₁, A₂, ···Aₙ and the respective power of the image height. This polynomial expression F3 is applied to a data set of the non-center-area light amounts P at the zooming position Zp1, for example, shown in Fig. 2. Then, the least-squares method is used to obtain values of the approximate polynomial coefficients A₀, A₁, A₂ ... Aₙ. Thus, the non-center-area light amounts P at the respective image height IH can be obtained. Then, a corrective value at an arbitrary image height can be obtained based on the obtained values of the non-center-area light amounts P and the formula F2. To correct a color image, the image pixel for each of RGB elements is needed to be corrected by using the formula F2.

The above-described approximation using the polynomial expression F3 is conducted to the data sets of the non-center-area light amounts relative to the image heights at every numerical aperture, zooming position, and shooting distance. Then, the obtained coefficients are preserved, so that the interpolation can be performed more accurately with less data amount than the linear interpolation.

As described above, condition data at the image shooting, such as the numerical aperture, zooming position, and shooting distance are used for correction. The condition data can be obtained through an optical control mechanism which so controls a lens, shutter, aperture, and so on at the image shooting.

Accordingly, when an image is shot with a digital camera, a correction on the shot image can be conducted at an arbitrary time if the above-described condition data is recorded together with the shot images and is separately used at the correction.

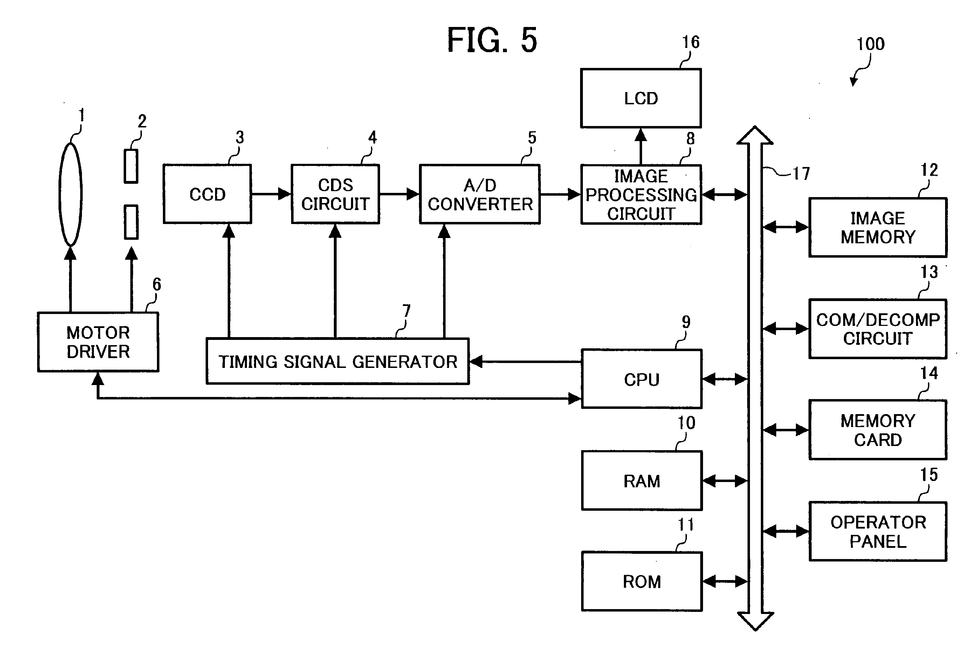

Referring to FIG. 5, a digital camera 100 according to another embodiment of the present invention is explained. As shown in FIG. 5, the digital camera 100 includes a shooting optical system 1, a mechanical shutter 2, a CCD (charge-coupled device) 3, a CDS (correlated double sampling) circuit 4, an A/D (analog-to-digital) converter 5, a motor driver 6, a timing signal generator 7, and an image processing circuit 8. The digital camera 100 further includes a CPU (central processing unit) 9, a RAM (random access memory) 10, a ROM (read only memory) 11, an image memory 12, a com-decom (compression and decompression) circuit 13, a memory card 14, an operation panel 15, an LCD (liquid crystal display) 16, and a bus line 17.

As shown in FIG. 5, light emitted from a subject enters the digital camera 100 through the shooting optical system 1 and is received by the CCD 3 via the mechanical shutter 2. The shooting optical system 1 is configured to move back and forth in directions relative to the subject by the motor driver 6 so as to control a field of view (i.e., a zooming) and a distance to the subject (i.e., a focusing). The mechanical shutter 2 is arranged between the shooting optical system 1 and the CCD 3, and it controls an amount (i.e., an aperture) and time of the light entering into the CCD 3. This mechanical shutter 2 is also driven by the motor driver 6. The CPU 9 and the motor driver 6 are main components to control the shooting optical system 1 and the mechanical shutter 2 in the optical control system of the digital camera 100.

The CCD 3 has an imaging surface on which the light from the subject is focused to form an optical image, and converts the optical image formed on the imaging surface into an electric signal. The CCD 3 then outputs the electric signal as analog image data. The image data output from the CCD 3 is input to the CDS circuit 4 which eliminates noise elements from the image data, and is transmitted to the A/D converter 5. The image data is converted by the A/D converter 5 into digital values and is input to the image processing circuit 8.

The image processing circuit 8 serves as a circuit for performing a YUV conversion and variety of image processing operations by using the image memory 12 for temporarily storing data such as image and so on. The variety of image processing operations performed by the image processing circuit 8 includes a white balance control, a contrast correction, an edge enhancement, a color conversion, etc. The white balance control adjusts a depth of a color of the image data. The contrast correction corrects a contrast of the image data. The edge enhancement adjusts a sharpness of the image data. The color conversion adjusts a hue of the image data. In addition, the image processing circuit 8 sends the image data after performing the variety of signal processing and image processing operations to the LCD 16 to display the image data. The image data having been subjected to the variety of signal processing and image processing operations is compressed by the comp-decomp circuit 13 and is recorded in the memory card 14. The comp-decomp circuit 13 compresses the image data output from the image processing circuit 8 and subsequently transfers the compressed image data to the memory card 14. In addition, the comp-decomp circuit 13 decompresses the image data read from the memory card 14 and transmits the decompressed image data to the image processing circuit 8.

Timings of the signal processing by the CCD 3, the CDS circuit 4, and the A/D converter 5 are controlled by the CPU 9 with the timing signal generator 7 which generates timing signals. Furthermore, the image processing circuit 8, the comp-decomp circuit 13, and memory card 14 are also controlled by the CPU 9.

The CPU 9 performs various kinds of arithmetic operations according to a program included in a plurality of programs stored in the ROM 11. In performing the processing, the CPU 9 uses the RAM 10 to temporarily stores data into a working area of the RAM 10. The CPU 9, the RAM 10, and the ROM 11 are coupled to each other through the bus line 17.

Although both of the image memory 12 and the memory card 14 are a sort of random access memory, they need to be a nonvolatile memory such as a flash memory so as to keep the image data after a power to the digital camera 100 is turned down. In addition, the image memory 12 may be allocated as a part of the memory card 14.

The operation panel 15 allows an input of user instructions such as a start of shooting (i.e., a release of the shutter), a power on and off of the digital camera 100, a power on and off of a strobe light, and various shooting conditions such as a resolution of shooting image. Further, the operation panel 15 also allows an input of a user instruction for performing the non-center-are light amount correction according to the present invention at a real time immediately after the shooting or at an arbitrary later time. In the latter case, the digital camera 100 stores the shooting condition data together with the image data.

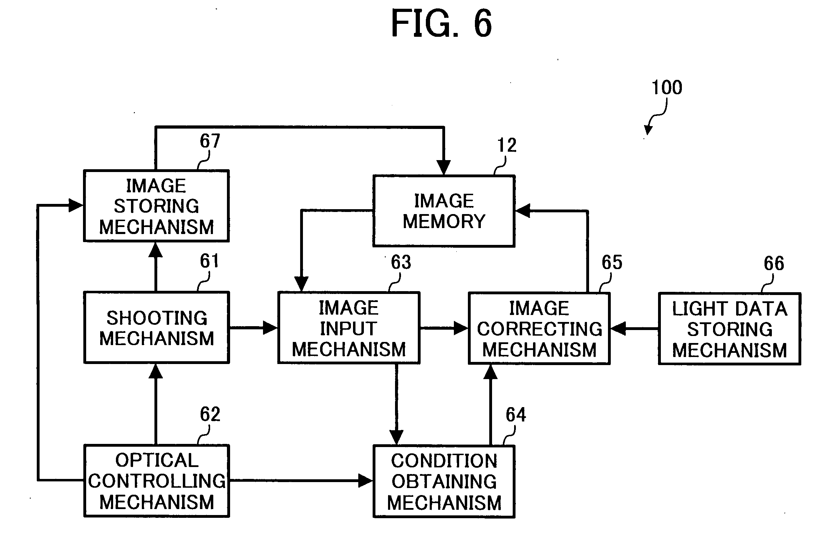

FIG. 6 illustrates a main functional block diagram of the digital camera 100 to perform the non-center-are light amount correction. As illustrated in FIG. 6, the digital camera 100 includes functional blocks of a shooting mechanism 61, an optical controlling mechanism 62, an image input mechanism 63, a condition obtaining mechanism 64, an image correcting mechanism 65, a light data storing mechanism 66, and an image storing mechanism 67.

The shooting mechanism 61 shoots image data using the shooting optical system 1, the CCD 3 and so forth. The image data shot by the shooting mechanism 61 is processed by either one of two ways. In one way, the image data is transmitted to the image storing mechanism 67 which associates the image data with various shooting conditions such as the zooming position, shooting distance, numerical aperture, etc. determined by the optical controlling mechanism 62 and sends the image data with the shooting conditions to the image memory 12. This processing is referred to as a non-real-time processing. In the other way, the image data is input to the image input mechanism 63 and subsequently to the image correcting mechanism 65 which performs the non-center-area light amount correction. The corrected image data is then sent to the image memory 12. This processing is referred to as a real time processing. A selection of either way is previously determined and provided to the digital camera 100 before the image shooting by the user.

In the real time processing, the condition obtaining mechanism 64 obtains the shooting condition data from the optical controlling mechanism 62. Then, the image correcting mechanism 65 receives such shooting condition data obtained by the condition obtaining mechanism 64, and reads a non-center-area light amount from the light data storing mechanism 66 in accordance with the shooting condition data obtained by the condition obtaining mechanism 64. After that, the image correcting mechanism 65 performs the non-center-are light amount correction on the image data and sends the corrected image data to the image memory 12.

In the non-real-time processing, as described above, the image data is stored in the image memory 12 in association with the shooting condition data through the image storing mechanism 67. The image input mechanism 63 reads the image data together with the shooting condition data from the image memory 12. Then, the condition obtaining mechanism 64 reads the shooting condition data, separated from the image data, from the image input mechanism 63. After that, the image data is subjected to the non-center-area light amount correction, and the corrected image data is sent to the image memory 12. In this non-real-time processing, the image data and the shooting condition data are temporarily stored in the image memory 12 before the performance of the non-center-are light amount correction. Therefore, the digital camera 100 can be ready for a next shooting without waiting for the performance of the non-center-are light amount correction.

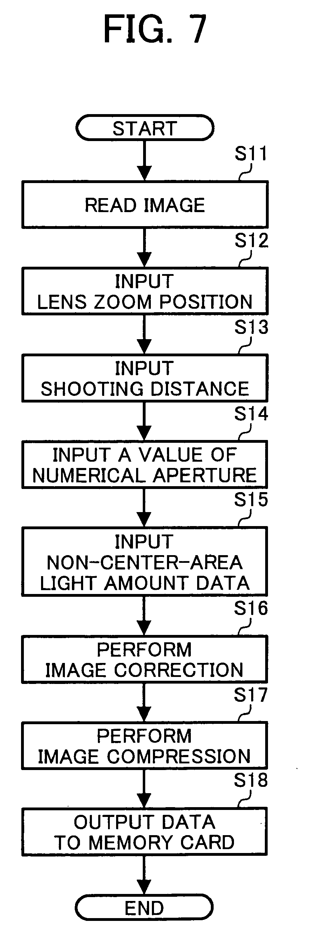

FIG. 7 shows a flowchart of an example procedure of the non-center-area light amount correction performed by the digital camera 100. In this procedure, the CPU 9 executes the program of the non-center-area light amount correction stored in the ROM 11. The CPU 9 reads image data in need for the correction from the image memory 12, in Step S11. Then, the CPU 9 reads a lens zooming position, a shooting distance, and a numerical aperture used at the shooting, in Steps S12, S13, and S14, respectively. For these values of the zooming position, shooting distance, and numerical aperture, the shooting conditions of the shooting optical system 1 and the mechanical shutter 2 are used, which conditions are made by the motor driver 6 at a performance of the shooting in accordance with the instructions by the CPU 9.

Then, in Step S15, the CPU 9 selectively reads data of the non-center-area light amount corresponding to the shooting conditions of the zooming position, shooting distance, and numerical aperture used at the shooting among the non-center-area light amounts stored in the RAM 10. After that, in Step S16, the CPU 9 performs the non-center-area light amount correction on the image data read from the image memory 12 in Step S11. The corrected image data is compressed by the comp-decomp circuit 13, in Step S17, and is stored in the memory card 14, in Step S18.

Since the above procedure is a non-real-time procedure, the data of the shooting conditions are read in Steps S12, S13, and S14. As an alternative to it, a real time procedure may be performed, that is, the image data can be corrected immediately after the shooting by using the data of the shooting conditions set at the shooting.

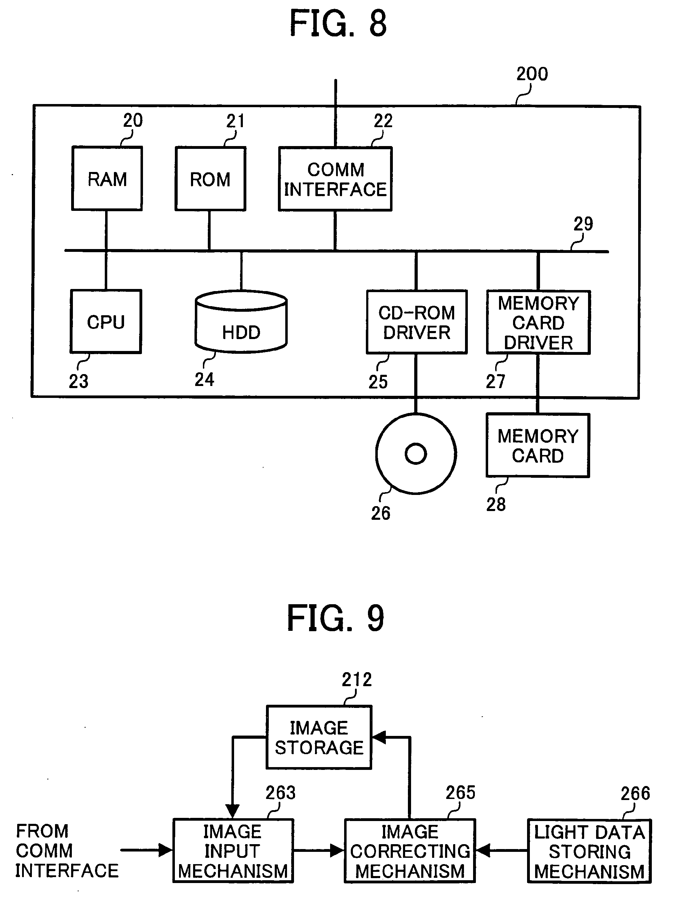

Referring to FIG. 8, an image correcting apparatus 200 according to another embodiment of the present invention is explained. As illustrated in FIG. 8, the image correcting apparatus 200 includes a RAM (random access memory) 20, a ROM (read only memory) 21, a communication (COMM) interface 22, a CPU (central processing unit) 23, a HDD (hard disc drive) 24, a CD-ROM (compact disc read only memory) driver 25, a memory card driver 27, and a bus line 29. The CPU 23 controls the entire operations of the image correcting apparatus 200. The CPU 23 is coupled to the RAM 20 and the ROM 21 via the bus line 29. The RAM 20 temporarily stores various kinds of data and reserves a working area for the CPU 23. The ROM 21 prestores various kinds of programs including an operating system and BIOS (basic input output system). This configuration may be built with a general purposed computer or a designated image correcting apparatus. The bus line 29 is further connected to the COMM interface 22 for interfacing communications with an external printer or another information devices, the HDD 24 storing various kinds of control programs, the CD-ROM driver 25 for reading a CD-ROM (compact disc read only memory) 26, and the memory card driver reading a memory card 28.

The CD-ROM 26 shown in FIG. 8 forms a recording medium which stores an image data correction program according to the present invention. The CPU 23 reads the image data correction program in the CD-ROM 26 via the CD-ROM driver 25 and installs it into the HDD 24. The recording medium of the image data correction program is not limited to the CD-ROM but other recording medium may be applied such as various kinds of optical discs such as a DVD (digital versatile disc), various kinds of magneto-optical discs, various kinds of magnetic discs such as a floppy disc, various other kinds of media such as a semiconductor memory, and so forth. Furthermore, the image data correction program of the present invention may be downloaded from a specific server through the Internet and installed into the HDD 24. In this case, a recording medium storing the image data correction program at the server which is a sender of the image data correction program is a recording medium according to the present invention.

The image data correction program according to the present invention may run under a predetermined operating system (OS). The image data correction program may leave a part of various operations mentioned below to the predetermined OS. As an alternative, a part of various operations of the image data correction program may be included in a group of program files which forms a specific application software such as a word processing software or the operating system.

In FIG. 8, the image correcting apparatus 200 receives the image data, captured by a shooting apparatus such as a digital camera, via the memory card 28 and stores the received image data into the RAM 20. Alternatively, the image data may be input to the image correcting apparatus 200 from the Internet through the communication interface 22, or from the CD-ROM 26. The file format of the image data may be Exif (exchangeable image file format) by which various kinds of shooting information can be recorded together with the image data. The shooting information may include a manufacturer and serial number of the shooting apparatus used, the zooming position, the shooting distance, the numerical aperture, etc.

The image correcting apparatus 200 loads the image correction program from the HDD 24 into the RAM 20 and executes the image correction program in the RMA 20. As an alternative, in a case the image correction program is stored in the ROM 21, the image correcting apparatus 200 merely executes the image correction program stored in the ROM 21. Then, the image correcting apparatus 200 reads information such as shooting conditions associated with the input image data and loads to the RAM 20 the data of the non-center-area light amount which corresponds to the shooting conditions and are recorded in the HDD 24 or the ROM 21. Then, the image correcting apparatus 200 performs the non-center-area light amount correction on the input image data with the loaded non-center-area light amount.

FIG. 9 illustrates a main functional block diagram of the image correcting apparatus 200 to perform the non-center-are light amount correction. As illustrated in FIG. 9, the image correcting apparatus 200 includes functional blocks of an image memory 212, an image input mechanism 263, an image correcting mechanism 265, and a light data storing mechanism 266.

The image input mechanism 263 receives the image data externally via the communication interface 11, or from the image memory 12 or the CD-ROM 26. The image correcting mechanism 265 reads the data of the shooting conditions such as the zooming position, shooting distance, and numerical aperture separately from the image data. Also, the image correcting mechanism 265 reads the data of the non-center-area light amount corresponding to the shooting conditions from the light data storing mechanism 266. Then, the image correcting mechanism 265 executes the non-center-area light amount correction on the input image data and sends the correction image data to the image storage 212.

This invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that within the scope of the appended claims, the disclosure of this patent specification may be practiced otherwise than as specifically described herein.

This patent specification is based on Japanese patent application, No. JPAP2005-051056 filed on February 25, 2005 in the Japan Patent Office, the entire contents of which are incorporated by reference herein.

## Claims

1. An image correcting method, comprising the steps of:
storing non-center-area light amount data;
inputting image data of an image taken by an optical system;
obtaining a plurality of shooting conditions including a zoom position of a lens, a shooting distance, and a numerical aperture set at a time the image was taken by the optical system; and
correcting a reduction of a non-center-area light amount relative to the image data by referring to the non-center-area light amount data in accordance with the plurality of shooting conditions including the zoom position of the lens, the shooting distance, and the numerical aperture set at the time the image was taken with the optical system.

2. The method of Claim 1, further comprising the step of:
preparing the non-center-area light amount data through at least one of calculation and measurement based on property data of the lens with predetermined conditions including a predetermined zoom position, a predetermined shooting distance, and a predetermined numerical aperture.

3. The method of Claim 1 or 2, further comprising the step of:
preparing the non-center-area light amount data by using a least squares approximation polynomial expressing a relationship between an image height and a non-center-area light amount, wherein the non-center-area light amount data includes resultant approximation coefficients of the polynomial.

4. The method of Claim 1, 2 or 3, wherein the obtaining step obtains the plurality of shooting conditions set at the time the image was taken by the optical system from the image data input in the inputting step.

5. The method of Claim 1, 2, 3 or 4, wherein the obtaining step obtains the plurality of shooting conditions set at the time the image was taken by the optical system from a control system of the optical system.

6. An image shooting apparatus, comprising:
an input mechanism configured to input image data of an image captured by the apparatus;
an information obtaining mechanism configured to obtain a plurality of shooting conditions including a zoom position of a lens, a shooting distance, and a numerical aperture set at a time the image was taken by the apparatus;
a data memory storing non-center-area light amount data; and
an image correcting mechanism configured to correct a reduction of a non-center-area light amount relative to the image data by referring to the non-center-area light amount data in accordance with the plurality of shooting conditions including the zoom position of the lens, the shooting distance, and the numerical aperture set at the time the image was taken by the apparatus.

7. The apparatus of Claim 6, wherein the information obtaining mechanism obtains the plurality of shooting conditions set at the time the image was taken by the apparatus from s control system of the optical system.

8. The apparatus of Claim 6 or 7, further comprising:
an image memory storing shot images together with plurality of shooting conditions including the zoom position of the lens, the shooting distance, and the numerical aperture set at the time the image was taken by the apparatus.

9. The apparatus of Claim 8, wherein the information obtaining mechanism obtains the plurality of shooting conditions set at the time the image was taken by the apparatus from the image data input by the input mechanism.

10. An image correcting apparatus, comprising:
an input mechanism configured to input image data of an image together with a plurality of shooting conditions including a zoom position of a lens, a shooting distance, and a numerical aperture set at a time the image is shot by a shooting apparatus;
a data memory storing non-center-area light amount data; and
an image correcting mechanism configured to correct a reduction of a non-center-area light amount relative to the image data by referring to the non-center-area light amount data in accordance with the plurality of shooting conditions including the zoom position of the lens, the shooting distance, and the numerical aperture set at the time the image was taken by the apparatus.

11. The apparatus of any one of Claims 6 to 10, wherein the non-center-area light amount data is prepared through at least one of calculation and measurement based on property data of the lens with predetermined conditions including a predetermined zoom position, a predetermined shooting distance, and a predetermined numerical aperture.

12. The apparatus of any one of Claims 6 to 11, wherein the non-center-area light amount data is prepared by using a least squares approximation polynomial expressing a relationship between an image height and a non-center-area light amount, wherein the non-center-area light amount data includes resultant approximation coefficients of the polynomial.

13. A computer program product comprising program code means that, when executed on a processor, instruct the processor to carry out an image correcting method according to any one of claims 1 to 5.
